# EUROPÄISCHE PATENTSCHRIFT

(11) **EP 1 010 719 B1**
(45) Veröffentlichungstag und Bekanntmachung des Hinweises auf die Patenterteilung: **25.06.2003**
(21) Anmeldenummer: 99125112.5
(22) Anmeldetag: 16.12.1999
(51) Int. Cl.: C08J 5/12

(54) **Verbundkörper aus technischen Thermoplasten und Polyurethan-Elastomeren unter Verwendung eines Haftvermittlers**
Composite body consisting of a technical thermoplast bonded to a polyurethane elastomer with an adhesion promoter
Corps composite d'un produit thermoplaste technique lié à un élastomère de polyuréthane au moyen d'un promoteur d'adhésion

(30) Priorität: 17.12.1998 DE 19858270
(43) Veröffentlichungstag der Anmeldung: 21.06.2000
(73) Patentinhaber: Ticona GmbH, 65451 Kelsterbach (DE); ERNST SONDERHOFF GmbH & Co. KG, D-50829 Köln (DE)
(72) Erfinder: Platz, Reinhold, Dr., 64367 Mühltal (DE); Danilow, Detlef, 53804 Much (DE); Link, Alfred, Dr., 50129 Bergheim (DE); Krämer, Norbert, 41539 Dormagen (DE); Langerbeins, Klaus, Dr., 50259 Pulheim (DE)

(56) Entgegenhaltungen:
- DE-A- 3 126 842
- FR-A- 2 443 488
- US-A- 4 443 519
- US-A- 5 120 415

## Beschreibung

Die Erfindung betrifft ein Verfahren zur Herstellung eines Verbundkörpers aus polaren Thermoplasten und Polyurethan-Elastomeren, bei dem das Thermoplastmaterial mit einem lösemittelhaltigen Haftvermittler behandelt wird, sowie die dadurch hergestellten und herstellbaren Verbundkörper. Durch den Einsatz des Haftvermittlers ist es möglich, eine Haftung von Polyurethan-Elastomeren auf Kunststoffen zu erhalten, die ohne Verwendung des Haftvermittlers keine Haftung zeigen.

Zu den polaren Thermoplasten zählen insbesondere sogenannte technische Thermoplaste, auch Hochleistungspolymere genannt, die sich durch hervorragende thermische, mechanische und chemische Eigenschaften auszeichnen und deshalb bevorzugt als technische Werkstoffe eingesetzt werden. Aufgrund der guten Festigkeit und Härte verbunden mit einer ausgezeichneten Rückstellelastizität finden daraus hergestellte Formteile in allen Bereichen des täglichen Lebens sehr häufig und vielfältig Anwendung, beispielsweise im Fahrzeug- und Gerätebau, für Gehäuse, Tastaturen und Schnappverbindungen. Ausgezeichnete Gleit-Reib-Eigenschaften begründen ferner die Verwendung für viele bewegliche Teile wie Getriebeteile, Umlenkrollen, Zahnräder und Verstellhebel.

Oft weisen jedoch derartige Formteile einen niedrigen mechanischen Dämpfungsfaktor auf, wodurch in einigen Anwendungsfällen der Einsatz von weichen Dämpfungselementen erforderlich wird. Außerdem ist beim Einbau von Formteilen zudem oftmals an Verbindungsstellen eine Abdichtung erforderlich oder die hohe Oberflächenhärte der Formteile, unter Umständen verbunden mit einem niedrigen Gleitreibungskoeffizienten, führt zu einem Verrutschen von aufliegenden Gegenständen, wodurch beispielsweise die Bedienungssicherheit von Schaltelementen und Bedienungselementen eingeschränkt sein kann. Aus diesen Gründen werden immer öfter Kombinationen aus harten und weichen Werkstoffen eingesetzt, um die besonderen Eigenschaften dieser Werkstoffe miteinander zu kombinieren. Der harte Werkstoff soll dabei die Festigkeit der Bau- bzw. Formteile bewirken, der weiche Werkstoff übernimmt aufgrund seiner elastischen Eigenschaften Funktionen zur Dichtung oder Vibrations- und Geräuschdämpfung oder bewirkt eine Veränderung der Oberflächenhaptik. Wichtig bei diesen Anwendungen ist eine ausreichende Haftung zwischen der harten und der weichen Komponente.

Häufig werden Dichtungen, Dämpfungselemente etc. aus einem weichen Werkstoff separat bereitgestellt und üblicherweise in einem zusätzlichen Arbeitsschritt mit einem Thermoplastformteil mechanisch verankert oder verklebt, was zusätzliche Arbeit und teilweise erhebliche Kosten verursacht.

Eine neuere und wirtschaftlichere Methode ist der Mehrkomponentenspritzguß. Hierbei wird beispielsweise auf eine vorgeformte erste Komponente eine zweite Komponente aufgespritzt. Die Haftung zwischen den beiden Komponenten soll dabei möglichst adhäsiv sein, kann aber in formschlüssigen Verbindungen, beispielsweise durch Anbringung von Hinterschnitten, oft noch verbessert werden. Eine gute Grundhaftung zwischen den beiden Komponenten, beispielsweise durch chemische Affinität, ist in der Regel Voraussetzung für deren praktischen Einsatz und somit von großer Bedeutung für dieses Verfahren.

Allgemein bekannt sind unter anderem nach dem Mehrkomponentenspritzguß hergestellte Kombinationen aus Polypropylen und Polyolefin-Elastomeren oder Styrol-Olefin-Elastomeren, Polybutylenterephthalat mit Polyester-Elastomeren oder Styrol-Olefin-Elastomeren. Auch Polyamide zeigen Haftung zu sehr vielen Weichkomponenten.

Bekannt sind auch Formteile aus Polyacetal mit direkt angeformten Funktionselementen, die unter Verwendung nicht vernetzter Kautschuke hergestellt wurden (DE-C 44 39 766). Die Haftfestigkeit derartiger Verbundkörper ist jedoch noch nicht zufriedenstellend.
Ebensolche Verbundkörper, die unter anderem aus einem Polyacetal, einem Kautschuk-Copolymerisat, einem verstärkenden Füllstoff, einem Vernetzer und gegebenenfalls weiteren üblichen Zuschlagstoffen bestehen sind in DE-A 9611272 beschrieben. Eine besonders gute Haftung der Polymerkomponenten wird hier durch die Vulkanisation des Kautschukanteils erreicht. Allerdings ist dieser zusätzliche Schritt wegen der erhöhten Vulkanisationstemperaturen und -zeiten nachteilig zu bewerten.

Eine weitere Anmeldung (deutsche Patentanmeldung Nr. 197 43 134.8) betrifft ein Verfahren zur Herstellung von Verbundkörpern aus Polyacetal und einer weichen Komponente, dergestalt daß das Polyacetal in einem ersten Schritt in einem Formwerkzeug vorgespritzt wird und in einem zweiten Schritt das Material mit der geringeren Härte aufgespritzt wird und dabei haftend mit dem Polyacetal verbunden wird. Dabei wird für den Bereich geringerer Härte ein thermoplastisches Polyurethan-Elastomer (TPE-U) mit einer Härte von Shore A 65 bis Shore D 75 eingesetzt. Dieser Härtebereich ist jedoch für viele Anwendungen zu hoch. Zudem weisen die beschriebenen thermoplastischen Polyurethan-Elastomere die bekannten Nachteile in der Verarbeitung, wie z.B. Feuchtigkeitsaufnahme, dadurch bedingte thermische Instabilität und Fließfähigkeitsschwankungen sowie Entformungsprobleme auf.

Um weichere Dämpfungselemente zu erhalten, bietet sich der Einsatz von geschäumten Elastomeren an, die generell eine geringere Härte als die entsprechenden kompakten Elastomere aufweisen. In den letzten Jahren haben sich daher Verfahren durchgesetzt, bei denen nach Entnahme des harten Werkstoffs aus der Spritzgußform auf diesen weiche Elastomer-Schaumdichtungen in einem zweiten Arbeitsschritt aufgebracht werden. Hierfür eignen sich besonders einkomponentige oder zweikomponentige Polyurethane. Insbesondere additionsvernetzende zweikomponentige Polyurethansysteme sind vorteilhaft, um durch die relativ schnelle Durchhärtung ohne das Erfordernis einer längeren Trocknungszeit hohe Produktionsleistungen zu erzielen. Angesichts der Verschiedenartigkeit der chemischen Grundsubstanzen und der Verarbeitungsbedingungen der harten und der weichen Komponente kommt es hierbei allerdings häufig zu Haftungsproblemen.

Zur Verbesserung der Haftung an thermoplastischen Kunststoffen ist es allgemein üblich, den Kunststoff zu beflammen oder mit einem anderen oxidativen Verfahren, z.B. Corona- oder Plasmabehandlung, die Oberfläche des Kunststoffs zu behandeln.

Es ist allgemein auch bekannt, eine Haftung von an sich nicht aufeinander haftenden Materialien zu bewirken, indem man einen Haftvermittler einsetzt. Der Haftvermittler muß dabei derart zusammengesetzt sein, daß er zu beiden miteinander in Verbund zu bringenden Materialien eine hohe chemische Affinität besitzt ohne dabei diese Materialien chemisch anzugreifen.

Während man für eine Vielzahl von Fällen, sei es die Haftung eines Kunststoffs auf Metall, Glas oder einem anderen Material, Lösungen gefunden hat, besteht bei bestimmten technischen Thermoplasten das Problem, eine ausreichend starke und dauerhafte Haftung zu Polyurethan-Elastomeren zu erreichen. Andererseits sind gerade diese technischen Thermoplaste für viele Anwendungen, beispielsweise im Automobilbau, interessant, in denen ein daraus hergestelltes Form-, Bau- oder Funktionsteil mit einer Dichtung versehen werden soll. Für derartige Dichtungen eignen sich wiederum Polyurethan-Elastomere besonders.

Es bestand daher die Aufgabe, ein Verfahren zur Herstellung eines Verbundkörpers aus technischen Thermoplasten und Polyurethan-Elastomeren bereitzustellen, bei dem die genannten Nachteile und Einschränkungen nicht vorhanden sind.

Überraschend wurde nun gefunden, daß unter Verwendung von Klarlacken oder Haftgründen, die zur Anwendung auf metallischen Oberflächen konzipiert sind, als Haftvermittler ein adhesiver Verbund von technischen Thermoplasten und anderen polaren Thermoplasten zu Polyurethan-Elastomeren erhalten wird. Bei den geeigneten Haftvermittlersystemen handelt es sich um lösemittelhaltige Polyurethanharzlacke und Acrylharzlacke, die wahlweise durch die Zugabe von Füllstoffen, Pigmenten oder einer Vernetzerkomponente modifiziert sein können.

Durch die erfindungsgemäße Verwendung dieser Haftvermittlersysteme können beispielsweise Dicht- oder Dämpfungselemente aus Polyurethan-Elastomeren direkt auf Formteile aus polaren Thermoplasten haftend abgelegt oder an diese angeformt werden, ohne daß Hinterschnitte oder weitere Montageschritte erforderlich werden. Ohne Verwendung dieser Haftvermittlersysteme läßt sich insbesondere zu Polyacetal und Polyester kein Verbund des Polyurethan-Elastomeren herstellen. Selbst allgemein übliche Techniken wie Anätzen, Plasmabehandlung (Coronaentladung) oder Beflammen der Oberfläche des Thermoplastformteils führen nicht zu dem gewünschten Ergebnis.

Die Erfindung betrifft daher ein Verfahren zur Herstellung eines Verbundkörpers aus mindestens einem polaren Thermoplasten und mindestens einem geschäumten oder ungeschäumten Polyurethan-Elastomeren, wobei erst ein Formteil aus dem polaren Thermoplasten geformt wird, dieses ganz oder teilweise mit einem Haftvermittlersystem auf der Basis von lösemittelhaltigem Polyurethanharzlack oder Acrylharzlack versehen wird, anschließend eine wahlweise flächige oder streifenförmige Beschichtung oder mindestens ein weiteres Formteil aus dem Polyurethan-Elastomeren aufgespritzt wird, und somit das Thermoplastmaterial über den Haftvermittler mit dem Polyurethan-Elastomeren verbunden wird.

Die Erfindung betrifft insbesondere auch die nach dem erfindungsgemäßen Verfahren herstellbaren Verbundkörper.

Der erfindungsgemäße Verbundkörper wird dabei durch ein Thermoplastformteil gebildet, das teilweise oder vollständig mit einem Polyurethan-Elastomeren beschichtet ist oder an das ein oder mehrere Formteile, auch Funktionsteile genannt, aus einem Polyurethan-Elastomeren direkt angeformt sind. Es kann sich dabei beispielsweise um ein flächiges Formteil handeln, das auf einer Seite eine Schicht aus Polyurethan-Elastomer trägt, oder um ein beliebig gestaltetes Formteil, auf welches das Polyurethan-Elastomer streifenförmig in Form sogenannter Raupen abgelegt ist.

Beispiele für erfindungsgemäße Verbundkörper sind im allgemeinen mit Dichtungen, Dämpfungs-, Halte- oder weiteren Funktionselementen etc. versehene Form- und Funktionsteile, die durch das Thermoplastmaterial die erforderliche Formstabilität und durch die Elastomer-Beschichtung die gewünschte Reibungseigenschaft, Dichtfunktion, Akustik, Haptik oder Optik erhalten. Hierzu zählen beispielsweise Gehäuse und Schließsysteme sowie Karosserie- und Fahrzeugteile im weitesten Sinne.

Der Verbundkörper kann aber auch aus einem oder mehreren Thermoplastformteilen beliebiger Gestalt bestehen, woran ein oder mehrere Formteile beliebiger Gestalt aus dem Polyurethan-Elastomeren direkt angeformt sind. Der Ausdruck "direkt angeformt" soll im Rahmen der vorliegenden Erfindung so verstanden werden, daß die Funktionselemente direkt auf das Formteil, mit dem sie einen haftfesten Verbund eingehen sollen, aufgespritzt werden, insbesondere in einem Mehrkomponentenspritzgußverfahren.

In jedem Falle wird die Haftung zwischen dem Thermoplastmaterial und dem Polyurethan-Elastomeren durch das erfindungsgemäße Haftvermittlersystem bewirkt, das auf das Thermoplastformteil aufgetragen wird, bevor man das Polyurethan-Elastomer aufspritzt.

Bei dem erfindungsgemäßen Haftvermittlersystem handelt es sich im allgemeinen um einen lösemittelhaltigen Polyurethanharzlack oder Acrylharzlack. Dieser kann wahlweise mit Füllstoffen wie Talkum, Schwerspat und Zinkoxid sowie mit Pigmenten, insbesondere funktionellen Pigmenten modifiziert sein, wodurch beispielsweise geringe thermische Expansionskoeffizienten und eine gute Adhäsion zu polaren und unpolaren Oberflächen eingestellt werden können.
Der Festkörperanteil im Lack beträgt üblicherweise mehr als 40 Gew.-%, häufig aber auch mehr als 50 oder 60 Gew.-% und wird den gewünschten Haft- und Verarbeitungsbedingungen angepaßt.
Als Lösemittel enthält das Haftvermittlersystem im wesentlichen organische, d.h. aliphatische und/oder aromatische Lösemittel, wobei es vorteilhaft sein kann, Mischungen aus verschiedenen Lösemitteln zu verwenden. Geeignete Lösemittel sind beispielsweise Butylacetat, Xylol, Ethylbenzol und Benzylalkohol sowie Mischungen daraus. Das Lösemittel bewirkt einerseits die Verarbeitbarkeit des Lackes, beispielsweise beim Aufstreichen oder Aufsprühen, sowie, durch eine minimale Erweichung der Kontaktfläche, ein tiefes Eindringen der funktionellen Bestandteile des Haftvermittlersystems in die Mikrostruktur der harten thermoplastischen Trägerkomponente.

Vorzugsweise wird erfindungsgemäß ein Lack mit urethanvernetzendem Acrylharz verwendet. Dieser Lack kann alleine oder gemeinsam mit einer Vernetzerkomponente, die im Acrylharz enthaltene Hydroxyl- oder Aminofunktionen vernetzt, verwendet werden. Als Vernetzerkomponente kann beispielsweise ein bi-, tri- oder mehr-funktionelles Isocyanat zugefügt werden. Die einzusetzende Menge an Vernetzer hängt dabei von der Menge und Funktionalität der zu vernetzenden Acrylharzkomponenten sowie vom gewünschten Vernetzungsgrad ab.

Die Besonderheit des erfindungsgemäß zu verwendenden Haftvermittlersystems besteht darin, daß es im allgemeinen auf polaren und unpolaren Oberflächen verwendet werden kann, d.h. insbesondere auf vielen Thermoplasten mit polaren Gruppen. Eine Anpassung des Haftvermittlersystems an bestimmte hartweich Komponenten (hart = Thermoplast, weich = Elastomer) kann durch Variation der Art und Menge von Füllstoffen, Pigmenten, Lösemitteln und Vernetzern erfolgen. Das Haftvermittlersystem zeigt gute Haftung zu Polyurethan, da chemische Ähnlichkeit und polare Gruppen vorherrschen. Ein weiterer Vorteil ist die nach dem Trocknen, d.h. nach dem Verdunsten des Lösemittels, zurückbleibende mattierte Oberfläche des aufgetragenen Haftvermittlers, die zusätzlich eine mechanische Verankerung des Polyurethan-Elastomeren bewirkt.

Die Herstellung des Verbundkörpers erfolgt nach den allgemein bekannten Methoden und Verfahren. Wirtschaftlich und vorteilhaft ist ein Verfahren, bei dem zunächst das Thermoplastformteil hergestellt wird, beispielsweise im Spritzgußverfahren, anschließend eine Beschichtung mit dem Haftvermittler erfolgt und danach das Polyurethan-Elastomer als Raupe oder flächig abgelegt oder als Formteil angespritzt wird. Dabei ist es möglich, das Polyurethan-Elastomer auf der mit dem Haftvermittler behandelten Fläche abzulegen, noch bevor dieser vollständig abreagiert und/oder getrocknet ist. Der Haftvermittler kann vorteilhaft durch Sprühverfahren, wie sie in der Lackindustrie üblich sind, aufgebracht werden. Das weiche Polyurethan-Material wird vorteilhafterweise zweikomponentig verarbeitet und kann, insbesondere wenn es in Form einer Raupe abgelegt werden soll, vorteilhaft mit einer Misch- und Dosiermaschine für kleine Ausstoßleistungen (ca. 0,1 bis 100 g/sec) aufgetragen werden.

Die Verbundfestigkeit bei Zugbelastung zwischen dem Thermoplastformteil und dem Polyurethan-Elastomeren, die durch das Verfahren gemäß der Erfindung erzielt wird, hängt allgemein davon ab, ob das Polyurethan-Elastomer in geschäumter oder ungeschäumter Form eingesetzt wird. Bei ungeschäumtem Polyurethan-Elastomer ist eine Verbundfestigkeit von mindestens 0,3 N/mm² für viele Anwendungen wünschenswert, bei geschäumtem Polyurethan-Elastomer ist eine Verbundfestigkeit von 0,1 bis 1,0 N/mm² erreichbar. Bei höherer Zugbelastung ist mit einem Reißen des Elastomeren zu rechnen. Für Funktionsteile ist - je nach Beanspruchung - eine höhere Haftung anzustreben.

Im Sinne der Erfindung liegt allgemein eine Haftung zwischen dem polaren, insbesondere technischen Thermoplasten und dem Polyurethan-Elastomeren vor, wenn beim Auseinanderziehen dieser beiden Bestandteile eines Verbundkörpers vorwiegend Kohäsionsbruch eintritt, d.h. wenn dabei Bestandteile einer Komponente an der anderen haften bleiben. Läßt sich das Polyurethan-Elastomer vom Thermoplasten abziehen, ohne daß Reste vom Elastomeren am Thermoplasten oder umgekehrt Reste des Thermoplasten am Elastomeren verbleiben, so liegt Adhäsionsbruch vor und es liegt keine ausreichende Haftung vor.

Zu den polaren Thermoplasten gemäß der Erfindung zählen im allgemeinen Polymere mit polaren funktionellen Gruppen in der Hauptkette, z.B. in den Strukturbausteinen der Kette, oder in Substituenten, insbesondere jedoch sogenannte technische Thermoplaste. Von den technischen Thermoplasten werden insbesondere Hochleistungspolymere, die einen Schmelzpunkt oberhalb von 100°C, insbesondere oberhalb von 200°C aufweisen für viele Anwendungen bevorzugt. Hochleistungspolymere werden beispielsweise beschrieben in Ullmann's Encyclopädia of Industrial Chemistry, 5. Auflage, VCH Verlagsgesellschaft mbH, Weinheim-New York 1992, in G.W. Becker, D. Braun: Kunststoffhandbuch Bd. 3/3, Carl Hanser Verlag, München 1994, worauf Bezug genommen wird.

Erfindungsgemäß zählen zu den technischen Thermoplasten insbesondere Polyacetale, Polyester, Polyarylensulfide, Polycarbonate, Polyphthalamide, Polyetherimide, Polyetheretherketone, syndiotaktisches Polystyrol (SPS), Cycloolefincopolymere und flüssigkristalline Polymere (LCPs). Die Thermoplaste können einzeln oder als Mischung sowie als Blend mit einem oder mehreren anderen thermoplastischen, duroplastischen oder elastomeren Kunststoffen verwendet werden. Insbesondere können die Thermoplaste auch andere polymere Zusätze beinhalten, beispielsweise um die chemischen oder mechanischen Eigenschaften des Thermoplasten auf eine bestimmte Anwendung hin zu modifizieren, oder um seine Haftungseigenschaften zu verbessern.

Als technische Thermoplasten können neben neu produzierten Produkten auch Recyclate der 1., 2. und höheren Generationen sowie Gemische aus neu produzierten Produkten und Recyclaten, die gegebenenfalls Zuschlagstoffe und Zusätze enthalten und/oder durch Beimischung anderer kompatibler Polymere modifiziert sind, verwendet werden.

Polyacetale sind allgemein bekannt und werden beispielsweise in der DE-A 29 47 490 beschrieben. Es handelt sich hierbei im allgemeinen um sogenannte Polyoxymethylene (POM), die in der Regel mindestens 80 Mol-%, vorzugsweise mindestens 90 Mol-% Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere aus Formaldehyd oder seinen cyclischen Oligomeren, insbesondere Trioxan, und cyclischen Ethern, cyclischen Acetalen und/oder linearen Polyacetalen.

Die eingesetzten Polyacetale haben im allgemeinen einen Schmelzindex (MFR-Wert 190/2,16) von 0,5 bis 75 g/10 min (ISO 1133). Es können auch modifizierte POM-Typen eingesetzt werden, beispielsweise Blends aus POM mit TPE-U (Thermoplastisches Polyurethan-Elastomer), mit MBS (Methylmethacrylat/Butadien/Styrol-core-shell-Elastomer), mit Methylmethacrylat/Acrylat-core-shell-Elastomer, mit PC (Polycarbonat), mit SAN (Styrol/Acrylnitril-Copolymer) oder mit ASA (Acrylat/Styrol/Acrylnitril Copolymer-Compound).

Polyester enthalten bevorzugt polymerisierte Einheiten, die sich von dem Ester mindestens einer aromatischen Dicarbonsäure, insbesondere Terephthalsäure, Isophthalsäure oder 2,6-Naphthalindicarbonsäure, und mindestens eines linearen aliphatischen Dialkohols, insbesondere Ethylenglykol, 1,3-Propandiol oder 1,4-Butandiol, oder polymerisierte Einheiten, die sich vom Tetrahydrofuran ableiten. Derartige Polyester sind beispielsweise in "Ullmann's Encyclopedia of Industrial Chemistry", ed. Barbara Elvers, Vol. A21, Kapitel Polyester (S. 227-251), VCH, Weinheim-Basel-Cambridge-New York, 1992 beschrieben. Die Polyester können sowohl Homopolymere als auch Copolymere dieser Bausteine sein. Besonders bevorzugt sind Polybutylenterephthalat und Polyethylenterephthalat sowie Poly(butylenterephthalat-co-butylenisophthalat).

Die Polyesterrohmaterialien können auch durch Einkondensieren geringerer Anteile aliphatischer Dicarbonsäuren wie z.B. Glutarsäure, Adipinsäure oder Sebacinsäure oder von Polyglykolen wie Diethylenglykol, Triethylenglykol oder auch höhermolekularer Polyethylenglykole modifiziert sein sowie polymerisierte Einheiten enthalten, die sich von Hydroxycarbonsäuren, bevorzugt Hydroxybenzoesäure oder Hydroxynaphthalincarbonsäure, ableiten.

Polyarylensulfide sind u.a. auch als Polyarylenthioether bekannt. Hierzu zählen temperaturbeständige Polymere, die aus Arylensulfidgruppen aufgebaut sind. Den Aryleneinheiten liegen dabei ein- oder mehrkernige aromatische Verbindungen wie Phenylen, Biphenylen, Naphthalen, Anthracen oder Phenanthren zugrunde, die wahlweise einfach oder mehrfach substituiert sein können. Bevorzugte Polyarylensulfide sind Polyphenylensulfide, die beispielsweise unter den Handelsnamen ®Fortron und ®Ryton bekannt sind.

Polycarbonate werden beispielsweise in "Encyclopädia of Polymer Science and Engineering", John Wiley & Sons, New York 1988, Vol. 11, S. 648-718 beschrieben, worauf Bezug genommen wird. Polycarbonate werden beispielsweise unter dem Namen ®Makrolon (Bayer AG) angeboten

Cycloolefincopolymere werden beschrieben von H. Cherdron, M. Brekner und F. Osan in Die Angewandte Makromolekulare Chemie (223), 121, 1994, worauf Bezug genommen wird. Cycloolefincopolymere werden beispielsweise unter dem Namen ®Topas (Ticona GmbH) angeboten.

Polyetheretherketone (PEEK) sind kommerziell erhältlich von Victrex Deutschland GmbH, flüssigkristalline Polyester sind beispielsweise unter dem Namen ®Vectra (Ticona GmbH) und Polyetherimide unter dem Namen ®Ultem (General Electric) erhältlich.

Erfindungsgemäß können sowohl einkomponentige als auch zweikomponentige Polyurethan-Elastomere verwendet werden. Besonders vorteilhaft ist die Verwendung eines additionsvernetzenden, zweikomponentigen Polyurethan-Weichschaumsystems. Das erfindungsgemäß verwendete Polyurethan-Elastomer setzt sich dabei aus mehrfunktionellen kurz-, mittel- oder langkettigen Alkoholen (Polyole) zusammen, die auf Polyesterbasis oder auf der Basis von Propylenoxid/Ethylenoxid-Copolymeren (Etherpolyol) aufgebaut sind und deren Hydroxyl-Endgruppen durch mehrfunktionelle Isocyanate vernetzt werden.

Die A-Komponente eines zweikomponentigen Weichschaumsystems enthält außer den genannten Polyolen auch Wasser, Katalysatoren und andere bei der Polyurethanverarbeitung übliche Additive. Sie kann zusätzlich auch übliche Stabilisatoren, Verarbeitungshilfen oder zusätzliche Haftverbesserer, beispielsweise auf Basis von modifizierten Silanen, sowie von 0 bis 70 Gew.-% anorganische Füllstoffe enthalten.

Die B-Komponente eines solchen Systems besteht überwiegend aus bifunktionellen und höherfunktionellen Isocyanaten. Üblicherweise sind diese aromatische Isocyanate wie Diphenylmethandiisocyanat (MDI) und Toluylendiisocyanat (TDI) oder aliphatische Isocyanate. Durch Variation der Zusammensetzung sowie des Mischungsverhältnisses von der A- und der B-Komponente ist es möglich, modifizierte und wahlweise geschäumte oder ungeschäumte Polyurethan-Elastomere mit unterschiedlichen Eigenschaften herzustellen. Der Begriff Polyurethan-Elastomer umfaßt dabei nicht sogenannte Thermoplastische Polyurethan-Elastomere (TPE-U).

Im allgemeinen kann sowohl das Thermoplastmaterial als auch das Polyurethan-Elastomer übliche Zusatzstoffe enthalten. Zu nennen sind hier beispielsweise Stabilisatoren, Nukleierungsmittel, Entformungsmittel, Gleitmittel, Füll- und Verstärkungsstoffe, Pigmente, Ruß, Licht- und Flammschutzmittel, Antistatika, Weichmacher und optische Aufheller. Die Zusatzstoffe können in allgemein üblichen Mengen vorliegen.

Neben den eingangs erwähnten Anwendungsgebieten finden die Verbundkörper gemäß der Erfindung Verwendung als Verbindungselemente in Form von Fittings, Kupplungen, Rollen, Lagern, als Funktionsteile mit integrierten Dichtund/oder Dämpfungseigenschaften sowie als rutschfeste und griffreundliche Elemente. Hierzu zählen insbesondere im Automobilbau verwendete Gehäuse wie Türschloßgehäuse, Fensterhebergehäuse, Schiebedachdichtelemente und ähnliche sowie Zentralverriegelungseinheiten, Innen- und Außenverkleidungen, Kotflügel, Stoßstangen etc., sowie Sicherungskästen und elektrische Verteilersysteme, Getriebe- und Motorgehäuse, Gehäuse zur Trennung von Naßund Trockenräumen, ferner Befestigungselemente mit integrierter Abdichtung wie Clipse mit Dichtringen oder -scheiben, Zierleisten mit integrierter Dichtlippe, Abdichtungselemente zum Ausgleich von Dehnungsfugen, Befestigungselemente mit guten Dämpfungseigenschaften, z.B. Clipse mit schwingungs- und geräuschdämpfenden Kernen, Getriebeteile wie Zahnräder mit Dämpfungselementen, Zahnradgetriebe mit integrierten flexiblen Kupplungen, rutschfeste und griffreundliche Elemente wie Schalthebel oder - knöpfe oder Grifflächen an Elektrogeräten, Werkzeugen , Schreibstiften etc. sowie Kettenglieder mit elastischer Oberfläche.

Die nachfolgenden Beispiele sollen dem Fachmann die Erfindung näher erläutern, ohne daß das Wesen der Erfindung dadurch eingeschränkt würde.

In den erfindungsgemäßen Beispielen wurden folgende Haftvermittlersysteme verwendet:
Percotex-Strukturlack 449 RAL 5015 (Spies Hecker GmbH, Köln):
   Mischung von Polyurethanharzen, Pigmenten und/oder Füllstoffen, und organischen Lösemitteln (ca. 35 Gew.-%).
   Percotex LA-Haft-/Grund 040 RAL 6013 und RAL 7035 (Spies Hecker):
      Mischung von OH-funktionellen Acrylharzen, Pigmenten und/oder Füllstoffen wie Talkum, Schwerspat, Zinkoxid und andere funktionelle Pigmente, und organischen Lösemitteln (ca. 40 Gew.-%).
   Helacryl-Klarlack für Leichtmetalle (Spies Hecker):
      Mischung von OH-funktionellen Acrylharzen und organischen Lösemitteln (ca. 50 Gew.-%).
   Vergleichsweise wurde ein auf Wasser basierender Haftvermittler eingesetzt:
      Baydur PU-Haftvermittler (Rhein Chemie Rheinau, GmbH, Mannheim):
         Wässerige Polyurethan-Dispersion ohne weitere Füllstoffe, ca. 40 Gew.- % Polyurethananteil.

Als Härter wurde Percotex-Härter 3840 (Spies Hecker), silikonfreier Härter enthaltend ca. 25 Gew.-% organisches Lösemittel und ca. 75 Gew.-% aliphatisches lsocyanat (z.B. Hexamethylendiisocyanat) eingesetzt. Der Härter wurde im Verhältnis 10:1 mit dem Haftvermittler gemischt (1 Gew.-Teil Härter auf 10 Gew.-Teile Haftvermittler).

Als Polyurethan-Elastomer wurde eines der folgenden 2-Komponenten-Polyurethanschaumsysteme (Ernst Sonderhoff GmbH, Köln) aufgetragen, wobei die beiden Komponenten A und B jeweils direkt beim Auftrag in einer Dosiereinrichtung gemischt wurden:

| A-Komponente: | B-Komponente | Mischungsverhältnis |
|---|---|---|
| Fermapor K31-9124 | K31-B5 | 3,5:1 |
| Fermapor K31-9299-1 | K31-B-RF | 6:1 |
| Fermapor K31-9260-2 | K31-B (Normal) | 6:1 |

| Zusammensetzung der A-Komponenten: | |
|---|---|
| Bi- und höherfunktionelle Polyetherpolyole | 50-95 Gew.-% |
| Farbpigmente | 0-20 Gew.-% |
| Verdickungsmittel oder Thixotropiermittel | 0,1-6 Gew.-% |
| Wasser | 0,1-6 Gew.-% |
| Bi- oder höherfunktionelle, kurzkettige Glykole | 0,1-10 Gew.-% |
| Sekundäre und tertiäre Aminkatalysatoren | 0,1-2 Gew.-% |
| Zinnkatalysatoren | 0,01-0,5 Gew.-% |
| Füllstoffe, optional funktionalisiert | 0-50 Gew.-% |
| weitere funktionelle Additive | 0-30 Gew.-% |

| Zusammensetzung der B-Komponenten: | |
|---|---|
| Diphenymethandiisocyanat (MDI), monomer | 10-95 Gew.-% |
| Polymer MDI | 0-50 Gew.-% |
| MDI-Derivate (Prepolymere etc.) | 0-80 Gew.-% |

Beispiel 1: Aus handelsüblichem Polyoxymethylen-Copolymer (Hostaform®-Typen der Ticona GmbH, Kelsterbach) wurden im Spritzgußverfahren Musterplatten geformt. Auf das abgekühlte Formteil wurde ohne weitere Vorbehandlung mit einer Dosiereinrichtung (Ernst Sonderhoff GmbH, Köln) der lösemittelhaltige Haftvermittler aufgetragen. Auf diese Beschichtung wurde nach vollständiger Trocknung, d.h. nach dem Verdunsten des Lösemittels, ebenfalls mit einer Dosiereinrichtung das Polyurethan-Elastomer in Form einer Raupe aufgetragen. An den somit erhaltenen Verbundkörpern wurde nach ca. 24 Stunden die Haftung beurteilt. Dazu wurde manuell die Polyurethan-Raupe abgezogen und das Rißverhalten der Raupe nach folgenden Kriterien subjektiv beurteilt:
- + +: Kohäsionsbruch
- +: überwiegend Kohäsionsbruch ca. 30-50 % der Kontaktfläche Kohäsionsbruch
- -: Adhäsionsbruch, mittlere Abzugskräfte erforderlich
- --: Adhäsionsbruch, geringe Abzugskräfte erforderlich

Vergleichsweise wurde die Oberfläche der Musterplatten gar nicht behandelt, mit Ethanol gereinigt, einer Corona-Behandlung unterzogen oder beflammt, bzw. ein auf Wasser basierender Haftvermittler aufgetragen. Das Aufbringen der Polyurethan-Raupe und die Beurteilung des Rißverhaltens erfolgte wie zuvor beschrieben. Das Ergebnis der Haftfestigkeitsuntersuchungen ist in den Tabellen 1 a und 1 b für verschiedene PU-Schaumsysteme zusammengefaßt.

**Table 1a:**

| Haftfestigkeit von 2-K PU-Schaum auf Polyoxymethylen | | | | |
|---|---|---|---|---|
| PU-Schaumsystem | Fermapor K31-9124/K31-B5 | | | |
| Thermoplast | Hostaform 9021 | Hostaform 9021 GF 20 | Hostaform S9063 | Hostaform S9064 |
| Unbehandelt | -- | -- | -- | -- |
| Mit Ethanol gereinigt | -- | -- | -- | -- |
| Corona-behandelt | -- | - | -- | -- |
| Beflammt | - | - | + | + |
| Percotex 449 | - | + | + | - |
| Percotex 6013 ohne Härter | o | ++ | ++ | ++ |
| Percotex 6013 mit Härter | o | ++ | ++ | ++ |
| Percotex 7035 ohne Härter | o | ++ | + | + |
| Percotex 7035 mit Härter | o | ++ | + | + |
| Helacryl ohne Härter | o | + | o | - |
| Helacryl mit Härter | - | + | o | o |
| Baydur | -- | - | -- | - |

**Table 1b:**

| Haftfestigkeit von 2-K PU-Schaum auf Polyoxymethylen | | |
|---|---|---|
| PU-Schaumsystem | Fermapor K31-9299/K31-B-RF | |
| Thermoplast | Hostaform 9021 | Hostaform 9021 GF 20 |
| Unbehandelt | -- | - |
| Mit Ethanol gereinigt | -- | - |
| Corona-behandelt | -- | - |
| Beflammt | - | - |
| Percotex 449 | o | + |
| Percotex 6013 ohne Härter | o | ++ |
| Percotex 6013 mit Härter | o | ++ |
| Percotex 703 5 ohne Härter | o | + |
| Percotex 703 5 mit Härter | o | ++ |
| Helacryl ohne Härter | o | + |
| Helacryl mit Härter | o | ++ |
| Baydur | - | -- |

Die Versuche belegen, daß durch die Verwendung von lösemittelhaltigen Haftvermittlersystemen die Haftung des PU-Schaumes auf Polyacetal deutlich verbessert werden kann. Dabei ist es prinzipiell unerheblich, ob der Haftvermittler mit oder ohne Zusatz eines Härters verwendet wird. Besonders gute Haftfestigkeiten werden zudem erreicht, wenn das Polyacetal Glasfaser (GF 20 = 20 Gew.-% Glasfaser) oder dispergierte thermoplastische Polyurethane (TPU) enthält (S9063 und S9064). Die Verwendung eines Härters zum Haftvermittler ist auf die jeweilige Kombination von Polyacetal und PU-Schaum hin abzustimmen.

Beispiel 2: Aus handelsüblichem Polybutylenterephthalat (Celanex®, Ticona GmbH) mit 20 bzw. 30 Gew.-% Glasfaseranteil wurden wie in Beispiel 1 beschrieben Musterplatten hergestellt und mit lösemittelhaltigem Haftvermittler behandelt. Vergleichsweise wurde die Oberfläche der Musterplatten gar nicht behandelt, mit Ethanol gereinigt, einer Corona-Behandlung unterzogen oder beflammt, bzw. ein auf Wasser basierender Haftvermittler aufgetragen. Das Aufbringen der Polyurethan-Raupe und die Beurteilung des Rißverhaltens erfolgte wie zuvor beschrieben. Das Ergebnis der Haftfestigkeitsuntersuchungen ist in Tabelle 2 zusammengefaßt.

**Tabelle 2**

| Haftfestigkeit von 2-K PU-Schäumen auf Polyester | | | | |
|---|---|---|---|---|
| PU-Schaumsystem | Fermapor K31-9124/K31-B5 | | Fermapor K31-9299-1/K31-B-RF | |
| Thermoplast | Celanex GF 20% | Celanex GF 30% | Celanex GF 20% | Celanex GF 30% |
| Unbehandelt | -- | -- | - | - |
| Mit Ethanol gereinigt | -- | - | - | - |
| Corona-behandelt | -- | ○ | - | - |
| Beflammt | - | ○ | - | - |
| Percotex 449 | ○ | + | ○ | + |
| Percotex 6013 ohne Härter | + | ++ | + | + |
| Percotex 6013 mit Härter | + | ++ | + | + |
| Percotex 7035 ohne Härter | ○ | + | ○ | + |
| Percotex 7035 mit Härter | ○ | + | + | + |
| Helacryl ohne Härter | - | + | ○ | - |
| Helacryl mit Härter | - | ○ | + | - |
| Baydur | - | - | - | - |

Beispiel 3: Aus handelsüblichem Polyphenylensulfid (Fortron®, Ticona GmbH) und handelsüblichem LCP-Polymer (flüssigkristalliner Polyester Vectra®, Ticona GmbH) wurden wie in Beispiel 1 beschrieben Musterplatten hergestellt und mit Haftvermittler behandelt. Das Aufbringen der Polyurethan-Raupe und die Beurteilung des Rißverhaltens erfolgte wie zuvor beschrieben. Das Ergebnis der Haftfestigkeitsuntersuchungen ist in Tabelle 3 zusammengefaßt.

**Tabelle 3**

| Haftfestigkeit von 2-K PU-Schaum auf Polyphenylensulfid und LCP-Polymer | | | | |
|---|---|---|---|---|
| PU-Schaumsystem | Fermapor K31-9299-1/31-B-RF | | | |
| Thermoplast | Fortron 1140 L4 | Fortron 6165 A4 | Vectra E130 | Vectra E130i |
| Percotex 6013 ohne Härter | ++ | ++ | ++ | ++ |
| Percotex 6013 mit Härter | ++ | ++ | ++ | ++ |
| Percotex 7035 ohne Härter | ++ | ++ | ++ | ++ |
| Percotex 7035 mit Härter | ++ | ++ | ++ | ++ |

**Tabelle 4**

| Haftfestigkeit von 2-K PU-Schaum auf Polyamid und Polypropylen | | |
|---|---|---|
| PU-Schaumsystem | Fermapor K31-9260/K31-B (normal) | |
| Thermoplast | PA66 | PP GF 40% |
| Unbehandelt | - | -- |
| Beflammt | ○ | ++ |
| Percotex 449 | + | -- |
| Percotex 6013 ohne Härter | ++ | -- |
| Percotex 6013 mit Harter | ++ | -- |
| Percotex 7035 ohne Härter | ++ | -- |
| Percotex 7035 mit Härter | ++ | -- |
| Helacryl ohne Härter | + | -- |
| Helacryl mit Härter | + | -- |
| Baydur | - | -- |

Beispiel 4: Aus handelsüblichem Polyamid PA66 und handelsüblichem Polypropylen (PP) mit einem Glasfaseranteil von 40 Gew.-% (Vergleichsbeispiel) wurden wie in Beispiel 1 beschrieben Musterplatten hergestellt und mit Haftvermittler behandelt. Vergleichsweise wurde die Oberfläche der Musterplatten gar nicht behandelt oder beflammt, bzw. ein auf Wasser basierender Haftvermittler aufgetragen. Das Aufbringen der Polyurethan-Raupe und die Beurteilung des Rißverhaltens erfolgte wie zuvor beschrieben. Das Ergebnis der Haftfestigkeitsuntersuchungen ist in Tabelle 4 zusammengefaßt.

Während bei Polyamid ebenfalls eine deutliche Verbesserung der Haftfestigkeit des PU-Schaumes durch Verwendung eines lösemittelhaltigen Haftvermittlers (mit oder ohne Zugabe eines Härters) zu verzeichnen ist, kann auf dem unpolaren Polypropylen selbst bei hohem Glasfaseranteil keine Verbesserung der Haftfestigkeit festgestellt werden.

Die Versuche zeigen insgesamt, daß durch die Verwendung eines auf Wasser basierenden Haftvermittlers (Baydur) keine Verbesserung der Haftfestigkeit erreicht werden kann.

Anwendungsbeispiel Türschloßgehäuse mit Dichtlippe: Aus Hostaform wurde im Spritzgußverfahren ein Türschloßgehäuse für eine KFZ-Tür gefertigt, das umläufig eine glatte Kante aufwies, mit der das Türschloß bei der Montage gedämpft mit der KFZ-Tür abschließen soll. Auf diese Kante wurde mit einer ersten Dosiereinrichtung Percotex LA Haft-/Grund 040 (RAL 7035) als Haftvermittlersystem aufgetragen. Noch vor dem vollständigen Abtrocknen des Lösemittels wurde mit einer zweiten Dosiereinrichtung das 2-Komponenten-Polyurethanschaumsystem Fermapor K31-9124 / K 31-B5 im Verhältnis 3,5/1 in Form einer Raupe auf die vorbehandelte Kante umläufig aufgetragen.

## Patentansprüche

1. Verfahren zur Herstellung eines Verbundkörpers aus mindestens einem polaren Thermoplasten und mindestens einem Polyurethan-Elastomeren, wobei erst ein Formteil aus dem polaren Thermoplasten geformt wird, dieses ganz oder teilweise mit einem Haftvermittler auf der Basis von lösemittelhaltigen Acrylharzen oder Polyurethanharzen versehen wird, anschließend eine wahlweise flächige oder streifenförmige Beschichtung oder mindestens ein weiteres Formteil aus dem Polyurethan-Elastomeren aufgespritzt wird und somit der Thermoplast über den Haftvermittler mit dem Polyurethan-Elastomeren verbunden wird.

2. Verfahren nach Anspruch 1, **dadurch gekennzeichnet, daß** der Haftvermittler einen zweikomponentigen urethanvernetzenden Acrylharzlack und optional funktionelle Pigmente und/oder Füllstoffe enthält.

3. Verfahren nach Anspruch 1 oder 2, **dadurch gekennzeichnet, daß** das Polyurethan-Elastomer auf das mit dem Haftvermittler versehene Thermoplastmaterial aufgetragen wird bevor die Urethanvernetzung und/oder die physikalische Trocknung des Haftvermittlers abgeschlossen ist.

4. Verfahren nach einem der Ansprüche 1 bis 3, **dadurch gekennzeichnet, daß** das Polyurethan-Elastomer in Form einer Dichtlippe im Strangablegeverfahren aufgebracht wird.

5. Verfahren nach einem der Ansprüche 1 bis 4, **dadurch gekennzeichnet, daß** als polarer Thermoplast ein technischer Thermoplast ausgewählt aus der Gruppe umfassend Polyacetal, Polyester, Polyarylensulfid, Polycarbonat, Polyphthalamid, Polyetherimid, Polyetheretherketon, Syndiotaktisches Polystyrol, Cycloolefincopolymer, flüssigkristallines Polymer oder eine Mischung davon oder ein Blend davon mit einem oder mehreren anderen Kunststoffen eingesetzt wird.

6. Verfahren nach Anspruch 5, **dadurch gekennzeichnet, daß** als technischer Thermoplast Polyoxymethylen-Homopolymer, Polyoxymethylen-Copolymer, Polybutylenterephthalat, Polyethylenterephthalat, flüssigkristalliner Polyester oder Polyphenylensulfid eingesetzt wird.

7. Verfahren nach einem der Ansprüche 1 bis 6, **dadurch gekennzeichnet, daß** handelsübliche Polyurethan-Elastomere auf Basis von Polyether und Diphenylmethandiisocyanat verwendet werden.

8. Verbundkörper aus einem technischen Thermoplasten und einem wahlweise geschäumten oder ungeschäumten Polyurethan-Elastomeren herstellbar nach einem der vorstehenden Verfahren, **dadurch gekennzeichnet, daß** die durch den Haftvermittler bewirkte Verbundfestigkeit zwischen dem Thermoplasten und dem Polyurethan-Elastomeren mindestens 0,3 N/mm² bei ungeschäumtem Polyurethan-Elastomer und 0,1 bis 1 N/mm² bei geschäumtem Polyurethan-Elastomer beträgt.

9. Verbundkörper nach Anspruch 8 in Form eines Formteils, welches ganz oder teilweise mit dem Polyurethan-Elastomeren beschichtet ist.

10. Verbundkörper nach einem der Ansprüche 8 und 9 in Form eines Formteils aus dem technischen Thermoplasten, an welches mindestens ein weiteres Formteil aus Polyurethan-Elastomer angeformt ist.

11. Verbundkörper nach einem der Ansprüche 8 bis 10 in Form eines mit Dichtlippen versehenen Schloßgehäuses.

## Claims

1. A process for producing a composite article from at least one polar thermoplastic and at least one polyurethane elastomer, where a molding is first molded from the polar thermoplastic, and some or all of this is provided with an adhesion promoter based on polyurethane resins or acrylic resins comprising solvents, and then a coating which may be in full-surface or strip form, or at least one other molding made from the polyurethane elastomer is used for overmolding, and the thermoplastic is thus bonded to the polyurethane elastomer via the adhesion promoter.

2. The process as claimed in claim 1, wherein the adhesion promoter comprises a two-component urethane-crosslinking acrylic-resin lacquer and, if desired, functional pigments and/or fillers.

3. The process as claimed in claim 1 or 2, wherein the application of the polyurethane elastomer to the thermoplastic material provided with the adhesion promoter precedes the urethane-crosslinking and/or the physical drying of the adhesion promoter.

4. The process as claimed in any one of claims 1 to 3, wherein the polyurethane elastomer is applied in the form of a sealing lip, by a process which lays down strips of material.

5. The process as claimed in any one of claims 1 to 4, wherein the polar thermoplastic used comprises an engineering thermoplastic selected from the group comprising polyacetal, polyester, polyarylene sulfide, polycarbonate, polyphthalamide, polyetherimide, polyether ether ketone, syndiotactic polystyrene, cycloolefin copolymers, liquid-crystalline polymers and mixtures or blends of these with one or more other plastics.

6. The process as claimed in claim 5, wherein the engineering thermoplastic used comprises polyoxymethylene homopolymer, polyoxymethylene copolymer, polybutylene terephthalate, polyethylene terephthalate, liquid-crystalline polyesters or polyphenylene sulfide.

7. The process as claimed in one or more of claims 1 to 6, wherein use is made of commercially available polyurethane elastomers based on polyether and diphenylmethane diisocyanate.

8. A composite article which can be produced from an engineering thermoplastic and from a polyurethane elastomer, either foamed or unfoamed, by one of the abovementioned processes, wherein the bond strength resulting from the adhesion promoter between the thermoplastic and the polyurethane elastomer is at least 0.3 N/mm² for unfoamed polyurethane elastomer and from 0.1 to 1 N/mm² for foamed polyurethane elastomer.

9. A composite article as claimed in claim 8, in the form of a molding, some or all of which has been coated with the polyurethane elastomer.

10. A composite article as claimed in claim 8 or 9, in the form of a molding made from the engineering thermoplastic, onto which at least one other molding made from polyurethane elastomer has been molded.

11. A composite article as claimed in any one of claims 8 to 10, in the form of a closure housing provided with sealing lips.

## Revendications

1. Procédé pour la fabrication d'un corps composite constitué d'au moins un thermoplastique polaire et d'au moins un élastomère de polyuréthanne, dans lequel on forme d'abord une pièce moulée à partir du thermoplastique polaire, celle-ci est pourvue complètement ou partiellement d'un promoteur d'adhérence à base de résines d'acryle ou de résines de polyuréthanne contenant des solvants, on moule ensuite un revêtement au choix plat ou en forme de bande ou au moins une autre pièce moulée en élastomère de polyuréthanne et le thermoplastique est ainsi associé à l'élastomère de polyuréthanne via le promoteur d'adhérence.

2. Procédé selon la revendication 1, **caractérisé en ce que** le promoteur d'adhérence contient une laque de résine d'acryle à deux composants, réticulant l'uréthanne et éventuellement des pigments et/ou des charges fonctionnel(le)s.

3. Procédé selon les revendications 1 ou 2,
**caractérisé en ce que** l'élastomère de polyuréthanne est appliqué sur le matériau thermoplastique pourvu du promoteur d'adhérence avant que la réticulation de l'uréthanne et/ou le séchage physique du promoteur d'adhérence soi(en)t terminé(s).

4. Procédé selon l'une quelconque des revendications 1 à 3, **caractérisé en ce que** l'élastomère de polyuréthanne est appliqué sous forme d'une lèvre d'étanchéité dans un procédé de dépôt par extrusion.

5. Procédé selon l'une quelconque des revendications 1 à 4, **caractérisé en ce qu'**on utilise comme thermoplastique polaire un thermoplastique technique du groupe constitué par le polyacétal, le polyester, le poly(sulfure d'arylène), le polycarbonate, le polyphtalamide, le polyétherimide, le polyétheréthercétone, le polystyrène syndiotactique, un copolymère de cyclooléfine, un polymère à cristaux liquides ou un mélange de ceux-ci ou un mélange de ceux-ci avec une ou plusieurs autres matières synthétiques.

6. Procédé selon la revendication 5, **caractérisé en ce qu'**on utilise comme thermoplastique technique un homopolymère de polyoxyméthylène, un copolymère de polyoxyméthylène, un poly(téréphtalate de butylène), un poly(téréphtalate d'éthylène), un polyester à cristaux liquides ou un poly(sulfure de phénylène).

7. Procédé selon l'une quelconque des revendications 1 à 6, **caractérisé en ce qu'**on utilise des élastomères de polyuréthanne usuels du commerce à base de polyéther et de méthanediisocyanate de diphényle.

8. Corps composite constitué d'un thermoplastique technique et d'un élastomère de polyuréthanne, qui est au choix moussé ou non moussé, pouvant être fabriqué selon l'un quelconque des procédés précédents, **caractérisé en ce que** l'adhérence provoquée par le promoteur d'adhérence entre le thermoplastique et l'élastomère de polyuréthanne est d'au moins 0,3 N/mm² pour un élastomère de polyuréthanne non moussé et de 0,1 à 1 N/mm² dans le cas d'un élastomère de polyuréthanne moussé.

9. Corps composite selon la revendication 8 sous forme d'une pièce moulée qui est revêtue complètement ou partiellement de l'élastomère de polyuréthanne.

10. Corps composite selon l'une quelconque des revendications 8 et 9 sous forme d'une pièce moulée en thermoplastique technique sur laquelle est moulée au moins une autre pièce moulée en élastomère de polyuréthanne.

11. Corps composite selon l'une quelconque des revendications 8 à 10 sous forme d'un bâti de serrure pourvu de lèvres d'étanchéité.
